# EUROPEAN PATENT SPECIFICATION

(11) **EP 4 549 311 B1**
(45) Date of publication and mention of the grant of the patent: **22.04.2026**
(21) Application number: 23206762.9
(22) Date of filing: 30.10.2023
(51) Int. Cl.: B64C 1/06, B64F 5/00, B64F 5/10

(54) **ARRANGEMENT AND METHOD FOR JOINING ADJACENT BARREL-SHAPED FUSELAGE SECTIONS OF AN AIRCRAFT FUSELAGE**
ANORDNUNG UND VERFAHREN ZUM VERBINDEN BENACHBARTER TONNENFÖRMIGER RUMPFABSCHNITTE EINES FLUGZEUGRUMPFES
AGENCEMENT ET PROCÉDÉ D'ASSEMBLAGE DE SECTIONS DE FUSELAGE ADJACENTES EN FORME DE TUBE D'UN FUSELAGE D'AÉRONEF

(43) Date of publication of application: 07.05.2025
(73) Proprietor: Airbus Operations GmbH, 21129 Hamburg (DE)
(72) Inventor: BENTHIEN, Hermann, 21129 Hamburg (DE); HEGENBART, Matthias, 21129 Hamburg (DE); ROTH, Ingo, 21129 Hamburg (DE)
(74) Representative: Isarpatent

(56) References cited:
- EP-A1- 3 040 265
- EP-A1- 4 000 885
- EP-A1- 4 129 817
- WO-A1-2023/199236
- US-A1- 2013 117 983
- US-A1- 2014 077 471

## Description

### TECHNICAL FIELD OF THE INVENTION

The invention relates to joining adjacent barrel-shaped fuselage sections of an aircraft fuselage in a circumferentially extending joint region and in particular to an arrangement and method for accomplishing such joining.

### TECHNICAL BACKGROUND

It is known as such to assemble a fuselage of an aircraft, such as e.g. a passenger or freight aircraft, by joining several barrel-shaped fuselage sections along circumferential joints. However, the fuselage sections are large components, usually having diameters in the order of several meters, and also are lightweight structures that are often slightly elastically deformable under the effect of their own weight.

Such fuselage sections therefore, despite large efforts for accurate manufacturing thereof, exhibit considerable tolerances, with respect to size and/or shape, that may add up during fuselage assembly and make assembly of adjacent fuselage sections time-consuming and laborious. For example, the sections may not be as round as expected. Therefore, during assembly of the fuselage sections, one may proceed by aligning the floors, e.g. passenger floors, of both sections and compensate the tolerances via a skin butt-strap interface. Additional forces at that interface during assembly may arise from the application of liquid sealant. Also, this kind of connection requires the installation of a large number of fasteners such as rivets. Furthermore, any gaps that may remain, due to the existence of the tolerances mentioned, must be filled to avoid additional fuel consumption. Moreover, assembling the fuselage in this manner may result in considerable work for precisely adjusting cabin components in a laborious and therefore expensive process.

A method for manufacturing an aircraft fuselage from a multiplicity of fuselage barrels is described in EP 4 129 817 A1. The method comprises changing a size of a structural profile, which may be a barrel section, at least at a mating contour by expansion or contraction, e.g. thermally or mechanically.

Further, a method for joining two fuselage sections of aircraft or spacecraft, as well as a mounting device configured to aid the joining of two fuselage sections of an aircraft or spacecraft, are described in EP 3 040 265 A1. EP 3 040 265 A1 aims at more efficient assembly of fuselage sections and at increased joining precision. Close tolerances at a transverse joint portion are established by an intermediate coupling assembly which is pre-fabricated within very precise tolerances by design.

In WO 2023/199236 A1, an equipment and a process for making a structural element of composite material having a longitudinal axis and an axial cavity are described. The structural element is described as part of an aircraft fuselage. The equipment of WO 2023/199236 A1 comprises a laminating mandrel having a central shaft, a plurality of sectors, and linear actuators which extend between the central shaft and respective sectors. Using the linear actuators, the sectors can be moved between an expanded laminating position and a contracted position.

### SUMMARY OF THE INVENTION

In view of this background, a problem to be solved by the present invention therefore is to provide an improved arrangement which enables a time-saving, cost-effective and precise assembly of fuselage sections of an aircraft fuselage to each other, as well as to propose a correspondingly improved method.

This problem is solved by an arrangement having the features of claim 1 and/or by a method having the features of claim 12.

Accordingly, an arrangement for joining adjacent first and second barrel-shaped fuselage sections of an aircraft fuselage in a circumferentially extending joint region is proposed, wherein the arrangement comprises a foldable tool configured to assume at least an unfolded first configuration and a folded second configuration, and a rail device adapted to support and displaceably guide the tool such that the tool can be moved substantially along a longitudinal direction of the fuselage. In the first configuration, the tool is adapted to be operated to act on the joint region along a circumference of the fuselage from an interior of the fuselage so as to thereby bring about a reversible expansion of a material portion configured to form part of the joint region. Furthermore, in the second configuration, the tool fills a smaller part of a cross-sectional area of the fuselage than in the first configuration.

Furthermore, a foldable tool for use in joining adjacent first and second barrel-shaped fuselage sections of an aircraft fuselage in a circumferentially extending joint region is disclosed. The tool is configured to assume at least an unfolded first configuration and a folded second configuration, and is adapted to be supported and displaceably guided such that the tool can be moved substantially along a longitudinal direction of the fuselage. In the first configuration, the tool is adapted to be operated to act on the joint region along a circumference of the fuselage from an interior of the fuselage so as to thereby bring about an expansion of a material portion configured to form part of the joint region. In the second configuration, the tool fills a smaller part of a cross-sectional area of the fuselage than in the first configuration.

Still further, the invention proposes a method for joining adjacent first and second barrel-shaped fuselage sections of an aircraft fuselage in a circumferential joint region. In particular, the method may be performed using the arrangement provided in accordance with the invention.

The method comprises steps of:
- providing a foldable tool configured to assume at least an unfolded first configuration and a folded second configuration, and a rail device adapted to support and displaceably guide the tool such that the tool can be moved substantially along a longitudinal direction of the fuselage;
- in a state in which the first and second fuselage sections are spaced apart from each other by a distance along the longitudinal direction, operating the tool, which assumes the first configuration, to act on the joint region along a circumference of the fuselage from an interior of the fuselage and thereby bringing about a reversible expansion of a material portion configured to form part of the joint region;
- relatively moving the first and second fuselage sections towards each other along the longitudinal direction so as to close the joint region;
- operating the tool so as to reverse the expansion of the material portion;
- bringing the tool into the second configuration in which the tool fills a smaller part of a cross-sectional area of the fuselage than in the first configuration; and
- moving the tool on the rail device substantially along the longitudinal direction in order to axially remove the tool from the interior of the fuselage.

It is an idea of the invention to use a tool, configured in the manner of a foldable jig and capable of inducing a reversible expansion, to ensure a substantially forceless connection of adjacent barrel-type fuselage sections. By expanding the material portion that is part of the joint, the adjacent fuselage sections can be easily mated and forces due to tolerances of the individual sections and corresponding geometrical and/or dimensional mismatch at the circumferential joint, which usually would act in a non-uniform manner, are largely prevented from arising. The possibility provided by the invention to actively deform a fuselage section, at least within an end portion thereof in and near the joint region, using the expansion tool makes it possible to mitigate tolerance-driven deformations and obtain a zero-zero position to the masterline. In particular, a surface-driven masterline is made possible. For example, the foldable tool can also act as a deformation tool in order to modify and correct the shape of the fuselage section. The invention thus enables substantially zero tolerance and zero deformation fuselage installation.

Hence, the invention enables a rapid assembly of the fuselage sections to each other, as well as further improved quality and geometrical accuracy of the fuselage and the cabin installed therein. Much laborious adjustment work, e.g. on cabin components, may be dispensed with.

Furthermore, before joining the fuselage sections, these sections can be completed to a large extent, including most of the floor, in particular of the passenger floor. The foldable tool, capable of acting on the joint region along the circumference of the fuselage from the interior thereof when the tool is unfolded, can be folded to assume the second configuration in which its size is considerably reduced. Thus, even though the floor is installed in both the first and second sections, the foldable tool can be easily removed after the circumferential joint has been formed.

Advantageous improvements and developments of the invention are contained in the dependent claims as well as in the description referring to the drawings.

In a development, the tool may be operable to act on the material portion at successive locations along the circumference of the fuselage in the joint region, or may be operable to act on the material portion in a substantially continuous manner along the circumference. For instance, it may be expedient to mechanically act on the material portion, to obtain the expansion, at a plurality of locations, while in other implementations it may be expedient to apply for example heat in a continuous manner along the circumference.

In a preferred development, the tool is configured in a fan-type manner. In particular, the tool can be folded in the manner of a hand fan. In this manner, the first and second configurations can be well adapted to a generally round cross-sectional shape of a fuselage. For example, by providing the tool with a fan-type foldability, the tool can be easily confined in the second configuration to a space that is not much larger than approximately half of the cross-section of the fuselage in the joint region, while in the first configuration, the foldable tool may for instance fill this cross-section substantially completely. Thus, a single tool can be used to act on the complete circumference and can easily be removed as a single unit.

In a development, in the first configuration, the tool is capable of acting on the joint region along substantially the entire circumference of the fuselage. Thereby, advantageously, the complete joint region can be prepared for mating the fuselage sections along the entire circumference.

In particular, the material portion which can be expanded by action of the tool is part of an end portion of the first fuselage section and the tool is further adapted to be operated to abut on and/or mechanically engage with an end portion of the second fuselage section. This enables a precise positioning of the tool relative to the second fuselage section, in particular before bringing about the expansion of the material portion.

In a development, the end portion of the first fuselage section forms a female part of the joint region and the material portion which can be expanded by action of the tool is a portion of an outer skin of the first fuselage section. In this development, furthermore, the end portion of the second fuselage section forms a male part of the joint region and the tool is further adapted to be operated to mechanically abut on a butt strap of the second fuselage section and/or to engage with a frame of the second fuselage section adjacent the joint region.

According to an improvement, in the first configuration the tool extends, in a cross-section of the fuselage in the joint region, within a space having approximately the shape of a flat, circular disc. In this manner, the tool can be used to implement the circumferential joint when floor sections or modules are already installed, for the most part, in the fuselage sections, leaving only a narrow space around the joint in which floor plates, for example, still have to be installed after the fuselage sections have been joined.

According to a development, in the second configuration the tool extends entirely within a space on a single side of a floor formed by floor sections or modules installed in the first and second fuselage sections, in particular of a passenger floor, and preferably extends entirely within a space on an upper side of that floor. In this way, the foldable tool can easily be removed from the interior of the fuselage after having fulfilled its function, by axially displacing the tool, in particular using the rail device. Further, the space above the floor is usually sufficiently large for this purpose, in particular larger than the upper half of a circular disc, as this upper space in passenger airplanes accommodates the passenger cabin.

In a development, the tool may be adapted to bring about the expansion of the material portion configured to form part of the joint region by applying mechanical force onto the material portion, in particular in hydraulic or electromechanical manner. This can help to generate a precisely defined expansion and also a correction of the shape of the material portion and the end portion of the fuselage section to which it is connected.

Further, in another development, the tool may be adapted to bring about the expansion of the material portion configured to form part of the joint region by introducing heat into the material portion. For example, in this way a uniform, reversible expansion can be brought about in a simple manner and may be accomplished with no or only gentle surface contact, which in turn may contribute to protecting the surfaces of the fuselage section(s) and/or may enable a comparatively simple geometry of the tool.

In a development, the tool is adapted to additionally provide a counter support for blind riveting in the circumferential joint region, in particular using a riveting machine. Thereby, it becomes possible to perform blind riveting in the joint region, without load introduction or possible deformation.

According to a further development, the rail device comprises rails each extending substantially along a direction parallel to the longitudinal direction of the fuselage through an interior of each of the barrel-shaped fuselage sections, preferably laterally on both sides of the fuselage within the interior of the fuselage sections. This makes it possible to effectively support the tool in a displaceable manner and enables rail-guided axial extraction of the tool from the fuselage.

According to a still further development, the rail device is supported by a supporting arrangement provided outside of the barrel-shaped fuselage sections and by cantilever arms each extending from the supporting arrangement through an opening in a skin of the fuselage section to the rail device. The rail device thus can be supported without obstructing open ends of the fuselage sections, where these are to be joined to adjacent ones.

In a development of the method, the material portion which is expanded by action of the tool is part of an end portion of the first fuselage section, in particular a portion of an outer skin of the first fuselage section. In this development, before the expansion of the material portion is brought about, the tool is brought into abutment and/or mechanical engagement with an end portion of the second fuselage section, in particular is operated to abut on a butt strap of the second fuselage section and/or to engage with a frame of the second fuselage section adjacent the joint region.

In a development of the method, joining the first and second fuselage sections includes creating a positive connection by reversing the expansion of the material portion and/or includes riveting after reversing the expansion of the material portion. A positive or form-fit connection may enable a rapid, time-saving process for joining the fuselage sections, and may help to dispense with at least part of the total number of rivets in the joint region, or may even enable a substantially rivetless assembly. The reversible expansion using the foldable tool and/or the arrangement makes it possible to obtain such a form-fit connection in an efficient manner.

The developments, improvements and implementations of the invention described above can be applied in analogous manner to each of the arrangement, folding tool and method of the invention.

### BRIEF SUMMARY OF THE DRAWINGS

The present invention is explained in more detail below with reference to the embodiments shown in the schematic figures, wherein:
- Fig. 1: shows an exemplary aircraft and illustrates fuselage sections as well as joints between these in schematic manner;
- Fig. 2: schematically illustrates the joining of adjacent first and second barrel-shaped fuselage sections by connecting a female end portion of the first fuselage section and a male portion of the second fuselage section, and shows in subfigure (a) a schematic overview of the joining process as well as in subfigure (b) a detail sectional view in a joint region that is to be formed;
- Figs. 3-10: illustrate an arrangement for joining two fuselage sections in accordance with an embodiment of the invention in end views and show a way of operating the arrangement in accordance with the embodiment by illustration of various method steps;
- Figs. 11-17: illustrate, in detail sectional views, a plurality of successive steps of a process of joining the first and second fuselage sections using the arrangement according to the embodiment; and
- Figs. 18-20: illustrate detail sectional views of a butt-strap skin interface in the circumferential joint region according to further, alternative embodiments.

In the figures of the drawing, elements, features and components which are identical, functionally identical and of identical action are denoted in each case by the same reference designations unless stated otherwise.

### DESCRIPTION OF EXEMPLARY EMBODIMENTS

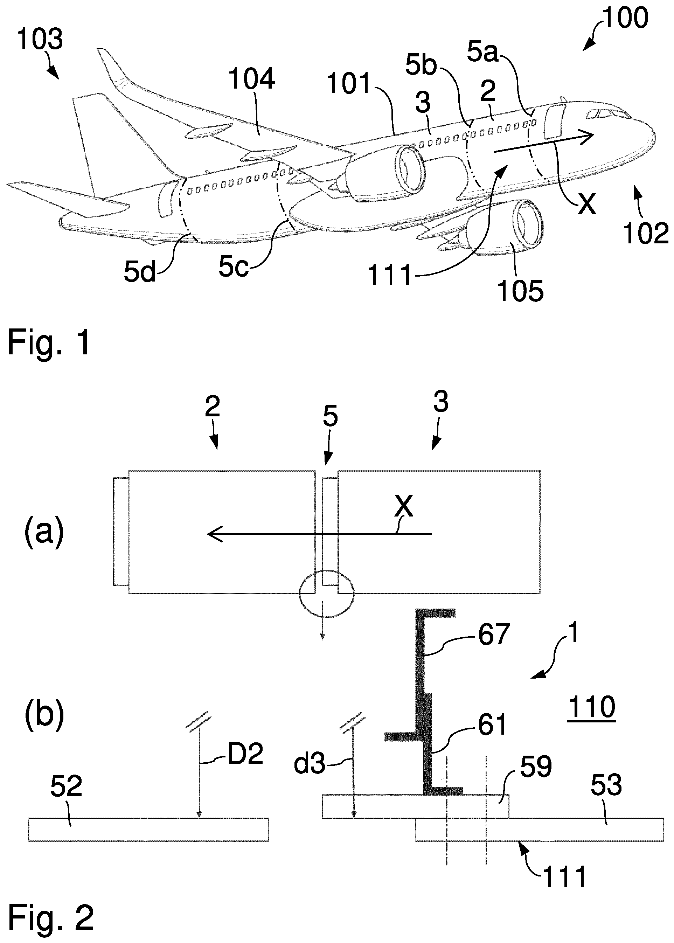

Fig. 1 shows an exemplary aircraft 100 comprising a fuselage 101 with a nose 102, an empennage 103, wings 104 and engines 105 attached to the wings 104. The fuselage 101 is formed by assembling a plurality of barrel-shaped fuselage sections, of which exemplary fuselage sections 2 and 3 are indicated in Fig. 1. Adjacent fuselage sections are connected to each other in circumferential joint regions 5a-5d.

A first fuselage section 2 and a second fuselage section 3 are schematically shown in Fig. 2 during joining a male end portion of the second fuselage section 3 with a female end portion of the first fuselage section 2 in a circumferential joint region 5. Fig. 2 shows in the sectional detail view at (b) that the female end portion of the first fuselage section 2 is formed with an outer skin 52 having an inner dimension D2, e.g. a diameter. Further, Fig. 2 shows that the male end portion of the second fuselage section 3 is formed with an outer skin 53, a butt strap 59 attached on an inner side of the outer skin 53 so as to axially protrude beyond an end edge of the outer skin 53 towards the first fuselage section 2, and with a circumferentially extending frame 67, attached to an inner side of the outer skin 53 using a clip 61, via the butt strap 59 which is interposed between the clip 61 and the skin 53. The butt strap 59 defines an outer dimension d3, e.g. a diameter, of the male end portion.

The shape of these end regions as well as the dimensions d3, D2 are subject to tolerances. In some cases, D2 may be smaller than d3, and the sections 2, 3 may not be as round as desirable, i.e. their shape may differ from a pre-defined target shape, for instance a pre-defined circular shape.

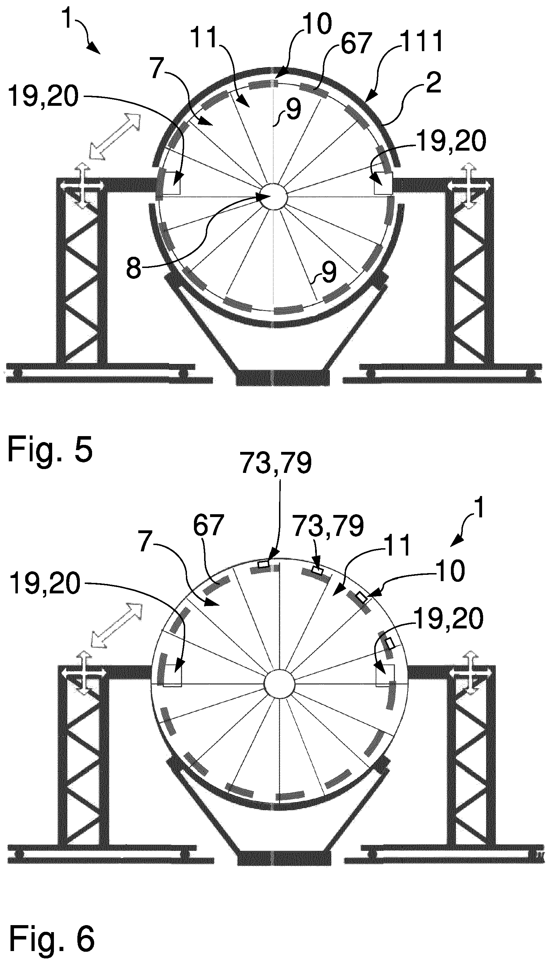

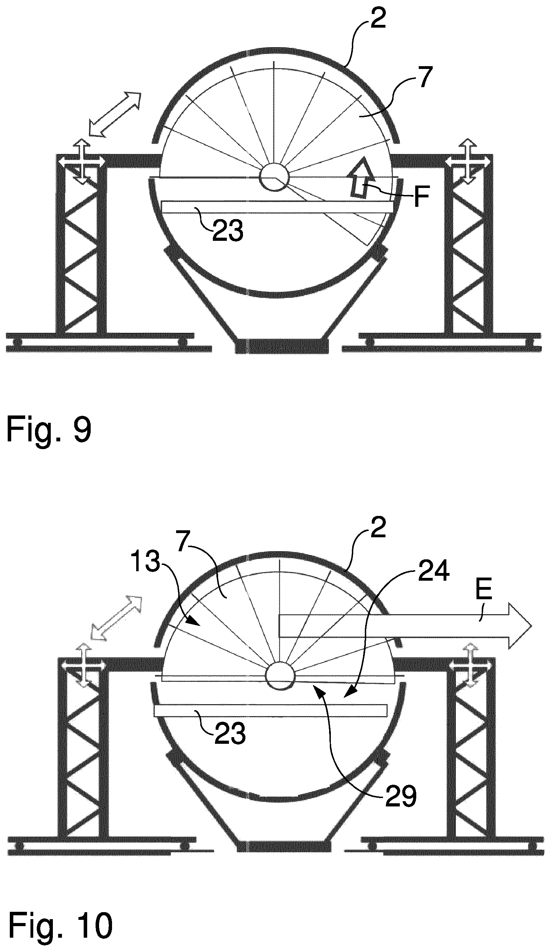

An arrangement 1 for joining the adjacent first and second barrel-shaped fuselage sections 2, 3 in the circumferentially extending joint region 5, which may for instance be any of the joint regions 5a-5d of Fig. 1, and its mode of operation, are described in the following in accordance with an embodiment of the invention with reference to Figs. 5-17.

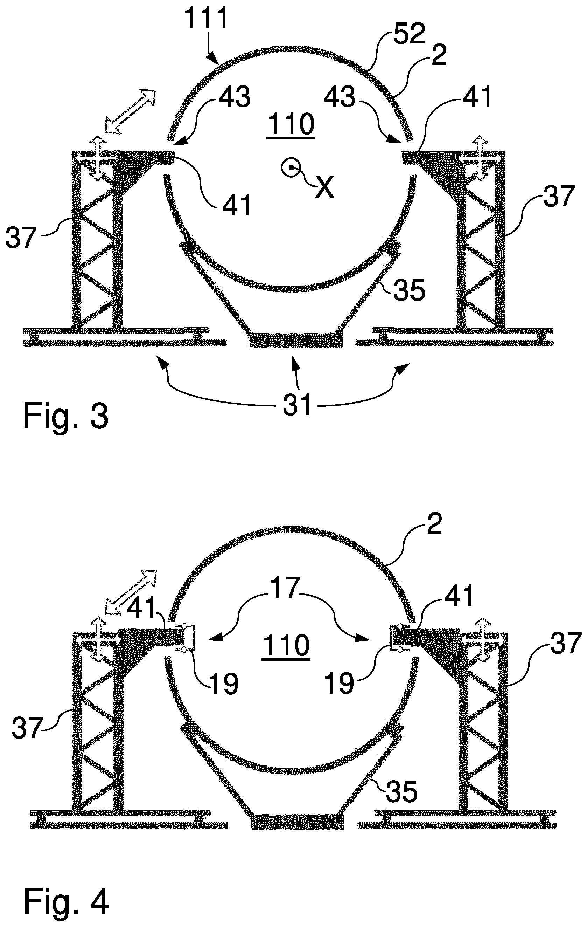

The arrangement 1 comprises a supporting arrangement 31 for each of the fuselage sections 2 and 3, of which only the supporting arrangement 31 for the first fuselage section 2 is shown in Figs. 3-10 in exemplary manner. An analogous supporting arrangement is provided for the second fuselage section 3. The supporting arrangement 31 is located outside of the fuselage section 2, 3.

The supporting arrangement 31 comprises a lower support 35 adapted to receive a lower region of the fuselage section 2 or 3 from an outer side of the outer skin 52 or 53 thereof. Laterally on both longitudinal sides of the fuselage section 2 or 3, support devices 37 are arranged. The support devices 37 may each be movable at least in a lateral direction, transverse to a longitudinal axis of the fuselage section 2. Each support device 37 carries a cantilever arm 41 which can be moved horizontally as well as vertically on the support device 37 in a controllable manner. In the situation in Figs. 3-10, each of the cantilever arms 41 extends through an opening 43 in the fuselage section 2 or 3, in particular a window opening in the outer skin 52 or 53, into an interior 110 of the fuselage 101 that is to be formed.

The arrangement 1 further comprises a rail device 17 which is supported by the supporting arrangement 31. More specifically, the rail device 17 includes rails 19 each carried by the cantilever arms 41. Each rail 19 extends longitudinally through an interior of the fuselage section 2, and thus through the interior 110 of the fuselage 101 to be assembled, laterally on both sides of the fuselage section 2. Accordingly, the rails 19 extend substantially parallel to a longitudinal direction X or flight direction of the fuselage 101.

On the rails 19, a foldable tool 7 is displaceably supported and guided. The tool 7 is thereby movable in a direction parallel to the longitudinal direction X of the fuselage 101. The tool 7 is displayed in a front view in Figs. 5-10 in several configurations. More specifically, the tool 7 has a fan-type shape and is foldable in a manner similiar to a round hand-held fan. The tool 7 may, for example, comprise a hub 8 and spokes 9, schematically illustrated and labelled in Fig. 5, wherein the spokes 9 are pivotable around the hub 8 for folding and unfolding of the tool 7. The spokes 9 of the tool 7 are connected to the hub 8 and support a peripherally extending outer effective region 10 of the tool 7 against the hub 8. It is to be noted that tool 7 is supported and guided by the lateral rails 19, and for this purpose, the tool 7 is provided with guiding means 20 capable of interacting with the rails 19 for movable support of the tool 7.

The tool 7 thus can assume an unfolded first configuration 11, shown in Figs. 5 and 6, in which the tool 7 substantially fills a cross-section of the fuselage sections 2, 3 in the joint region 5. In the first configuration 11, the foldable tool 7 then extends within a space that approximately has the shape of a flat, circular disc. The tool 7 may fill this space or most of it, or the flat, circular space may define a virtual envelope around the tool 7. Seen in a radial direction, the tool 7 is located entirely within the interior 110 of the fuselage 101 to be formed.

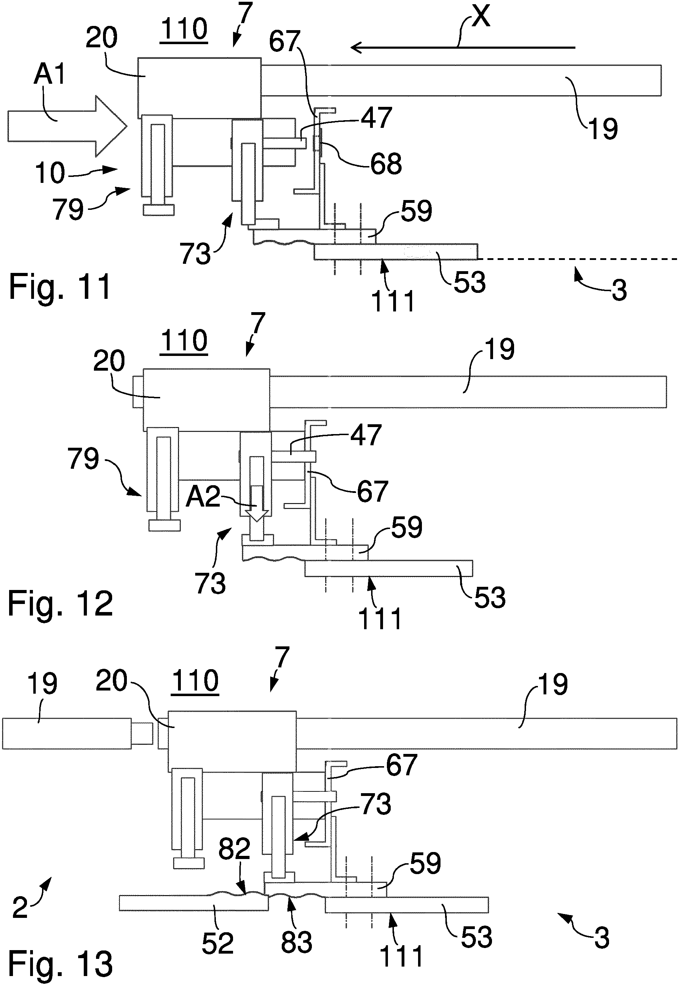

In the first configuration 11, the tool 7 can be operated to act on the joint region 5 along an entire circumference of the fuselage 101. More specifically, active elements in the effective region 10 can be actuated to act on the joint region 5. The way of action is explained in the following with further reference to Figs. 11-17. For the sake of clarity, the interior 110 of the fuselage 101 to be formed, and an outer surface 111 of the fuselage 101, are indicated in Figs. 11-17, too.

A first step of a method for joining the adjacent first and second barrel-shaped fuselage sections 2, 3 of the aircraft fuselage 101 in the circumferential joint region 5 using the arrangement 1 is illustrated in Fig. 11. The tool 7 is axially inserted into the male end portion of the second fuselage section 3 by moving the tool 7 along the rail 19 parallel to the longitudinal direction X, as indicated in Fig. 11 by arrow A1. The second fuselage section 3 is supported by a supporting arrangement 31 as described above. The tool 7 comprises axially extending engagement elements 47, in particular each shaped as a pin, which fits into a passage of an assigned bush 68 provided on the frame 67, e.g. inserted in an opening thereof. As the tool 7 is axially moved into the male end portion of the second fuselage section 3, each engagement element 47 is axially inserted into the respective bush 68.

In the effective region 10, the tool 7 comprises a plurality of male-side active elements 73 and of female-side active elements 79, one element 73 and one element 79 being shown in the detail views of Figs. 11-17. The elements 73, 79 are successively peripherally distributed, preferably in a uniform manner, along the entire circumference of the tool 7 in its unfolded configuration. Further, for instance, the engagement elements 47 may be peripherally distributed as well along that entire circumference of the tool 7. For example, each spoke 9 may be assigned to and/or adapted to carry one or more of the active elements 73, one or more of the active elements 79, and one or more of the engagement elements 47.

Fig. 12 shows a step subsequent to the step of Fig. 11, in which the active element 73 is extended, substantially radially in the direction of an arrow A2 in Fig. 11, so as to abut onto an inner side of the butt-strap 59. In this way, the tool 7 is fixed in relation to the rails 19 and the frames 67 of the second fuselage section 3. At the end of the step of Fig. 12, the end portion of the second fuselage section 3 has been equipped with the tool 7.

Axially adjacent to and coaxial with the second fuselage section 3, and spaced therefrom by an axial distance, the first fuselage section 2 is provided and supported by a further supporting arrangement 31. The supporting arrangement 31 and the first fuselage section 2 supported by it are axially moved towards the second fuselage section 3 for joining the fuselage sections 2 and 3 in the joint region 5, such that the female-side active element 79 is located on an inner side of the outer skin 52 in the female end portion of the first section 2. Fig. 13 shows that in this step, the outer skin 52 of the first fuselage section 2 cannot yet be easily mated with the protruding butt-strap 59 of the male end portion of the second fuselage section 3, and the sections 2 and 3 are still spaced from each other by a small distance. This may in the embodiment displayed in Figs. 11-17 be due to both tolerances and to a configuration and dimensioning that is intended to provide for a form-fit and, if desired, an additional interference fit between the outer skin 52 and butt-strap 59.

On the inner side, the outer skin 52 comprises a form-fit contour 82 corresponding to a form-fit contour 83 on an outer side of the butt-strap 59. The contours 82, 83 are adapted to fittingly engage with each other in order to establish the positive connection of the butt-strap 59 and the outer skin 52.

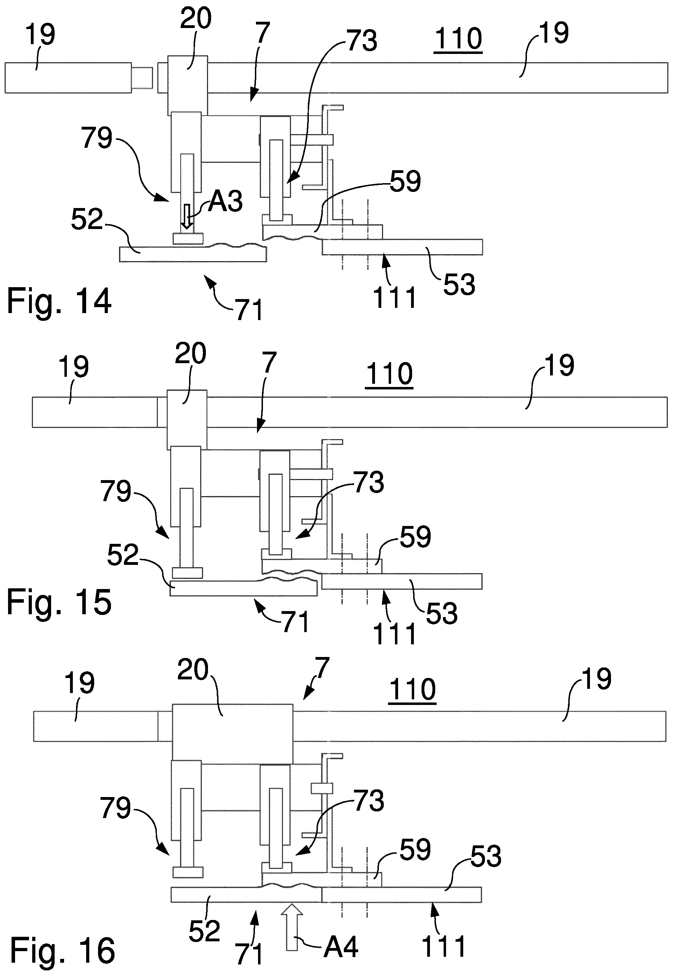

In order to be able to close the joint 5 and connect the outer skin 52 and the butt-strap 59, the tool 7 is operated to act, from the interior 110 of the fuselage 101 to be formed, onto a material portion 71 that is a part of the outer skin 52 near the female end portion of the first fuselage section 2. For this purpose, the female-side active elements 79 are operated to extend, substantially in a radial direction along arrow A3 in Fig. 14, and apply an outward mechanical force, along the entire circumference of the material portion 71 and preferably in a substantially uniform manner at uniformly spaced locations, on the material portion 71. Thereby, a substantially homogeneous, reversible and elastic expansion of the material portion 71 is caused and the inner dimension thereof is correspondingly increased.

The active elements 73 and/or 79, in particular the female-side active elements 79, can be actuated in hydraulic or electromechanical manner, for instance.

After the material portion 71 has been expanded, the first and second fuselage sections 2 and 3 can be joined in a substantially forceless manner by axially moving the sections 2, 3 and the respective arrangements 31 relative to each other along the longitudinal direction X, e.g. by moving the first fuselage section 2 towards the second fuselage section 3, see Fig. 15. In this step, the rails 19 of the rail devices 17 assigned to both the first and second fuselage sections 2 and 3 are connected, in such a manner that the tool 7 can be displaceably guided along both connected rails 19 across the connection.

In a subsequent step, illustrated in Fig. 16, the tool 7 is operated so as to retract the female-side active element 79, which allows the elastic expansion of the material portion 71 to be reversed. In this way, the positive, form-fit connection enabled by the corresponding contours 82, 83 is formed in the joint region 5. Further, an elastic force acting radially may remain, creating an additional interference fit.

An expanded state of the foldable tool 7, corresponding to the situation depicted in Figs. 14 and 15, is illustrated in a front view in Fig. 6, while a relaxed state of the foldable tool 7, corresponding to the situation e.g. in Figs 13 or 16, is schematically shown in Fig. 5.

In some variants, the form-fit connection in the joint region 5 can be substantially rivetless. In other implementations, the form-fit connection in the joint region 5 may be complemented by riveting. In particular, blind riveting may be performed along the joint region 5. When performing the blind riveting, schematically indicated by arrow A4 in Fig. 16, the male-side active element 73 can act as a counter support. The joint region 5 therefore can be riveted in an automated, rapid and expedient manner. The male-side active element 73 may also serve as a counter support for drilling, e.g. to drill rivet holes.

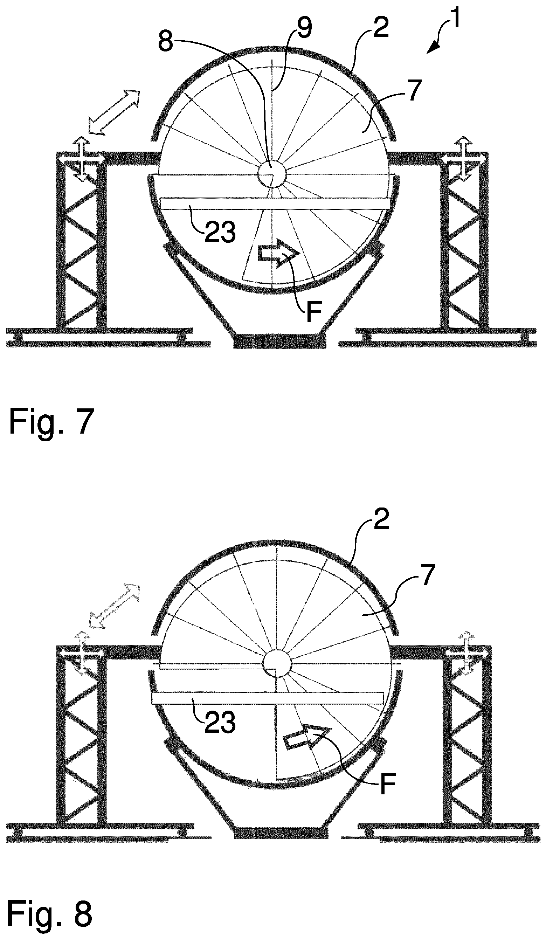

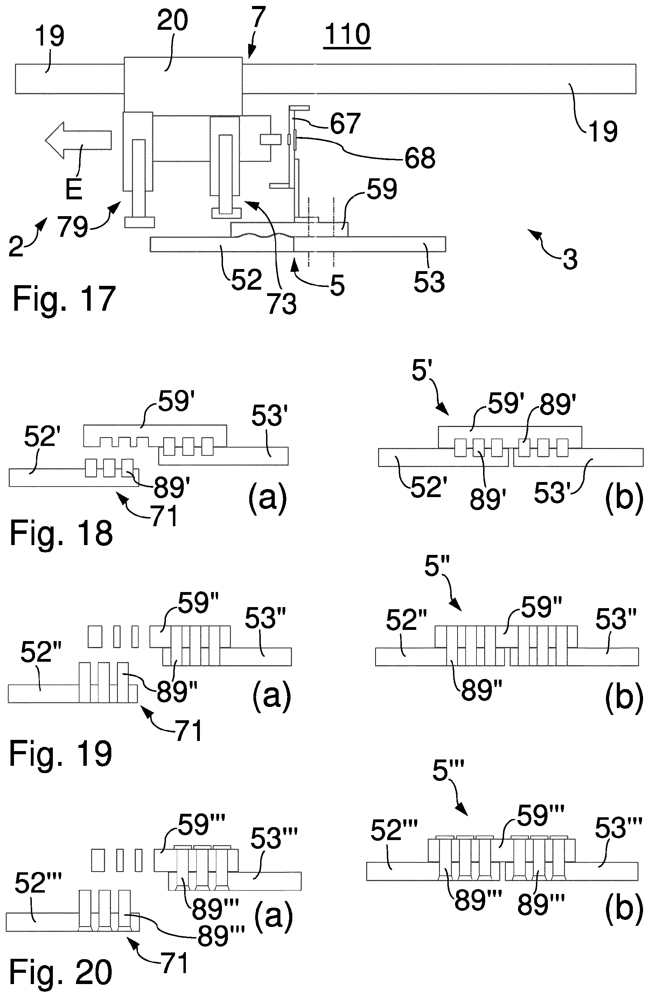

In a further step, illustrated in Fig. 17, after retracting the male-side active element 73 from the inner side of the butt-strap 59 and retracting the engagement elements 47 from the bushes 68, e.g. by a small axial movement of the tool 7 or by individually actuating the elements 47, the foldable tool 7 is brought into a second configuration 13. This is done by folding the tool 7. Folding the tool 7 includes pivoting a number or all of the spokes 9 about the hub 8 in a fan-like manner, see Figs. 7-10, which illustrate such a folding movement F. Thus, a pivoting movement may be applied only to some of the spokes 9, or all or most of the spokes 9 may pivot through an angle, e.g. a small angle.

Before both sections 2 and 3 are connected at the joint region 5, each of the sections 2 and 3 has already been completed to a considerable extent. In each of the sections 2, 3, a passenger floor 23 including a floor frame and most of the floor plates to be supported by the floor frame has already been installed, e.g. as a floor module. After folding the tool 7 to assume the second configuration 13, the tool 7 fills a smaller part of a cross-sectional area of the fuselage 101 than in the first configuration. Specifically, in the embodiment illustrated in the Figures, in the second configuration 13 the tool 7 is entirely located above the floor 23, including all of its spokes 9 and the hub 8.

Therefore, after assuming the second configuration 13, the tool 7 can be easily removed from the interior 110 by axially displacing the tool 7 along the rails 19 within a space 29 above an upper side 24 of the floor 23, wherein that space 29 is intended to accommodate a passenger cabin in the completed aircraft 100. By moving the tool 7 in this step along an extraction direction E, parallel to the longitudinal direction X, the tool 7 is removed so as to enable and/or facilitate subsequent work in the interior 110.

In the embodiment explained herein above with reference in particular to Figs. 11-17, the corresponding contours 82 and 83 of the outer skin 52 of the first fuselage section 2 and of the butt-strap 59 are shaped in a smooth, wavy manner, seen in a longitudinal section as in Figs. 11-17, and are formed integrally with the outer skin 52 and the butt-strap 59, respectively. Such contours 82, 83 may be designed to have relatively low requirements with respect to shape and position. The contours 82, 83 may be pre-shaped and may then be re-worked before joining the sections 2, 3. Their wavy shape can contribute to optimization of the joint 5 regarding fatigue.

However, in other embodiments, the joint region may be configured in a different manner.

For example, in a second embodiment, the corresponding contours may be implemented using individual, e.g. pin-type, elements 89' inserted into blind recesses or holes provided in each of the outer skins 52', 53' and the butt-strap 59'. This is illustrated in schematic manner in Fig. 18, at (a) for the still unconnected outer skin 52' and butt-strap 59', and at (b) for a completed joint region 5'. Such a type of positive connection in the joint region 5' may be manufactured in a facilitated manner. In a variant, the skin 53' and the butt strap 59' may be riveted.

Further, in a third exemplary embodiment, the corresponding contours may comprise individual, e.g. pin-type, elements 89" inserted into through-holes provided in each of the outer skin 52", 53" and the butt-strap 59". This is illustrated in schematic manner in Fig. 19, at (a) for still unconnected outer skin 52" and butt-strap 59", and at (b) for a completed joint region 5". Such a type of positive connection in the joint region 5" may be manufactured in a facilitated manner, too. In the embodiment of Fig. 19, the through-holes required to insert the elements 89" for connecting skin 52" and butt strap 59" may be created after the joint region 5" has been closed. For such a drilling step, the active element 73 may provide counter support. In a variant, the skin 53" and the butt strap 59" can be riveted.

Still further, in a fourth exemplary embodiment, the butt-strap 59‴ is connected to the outer skin 53‴ of the second fuselage section 3 by riveting before the sections 2, 3 are joined. Then, the sections 2, 3 may be joined as described above. Rivet holes for rivets 89‴ connecting the outer skin 52‴ and the butt-strap 59‴ can be drilled with the active element 73 of the tool 7 acting as a counter support, and afterwards, riveting may be performed. The active element 73 can also serve as a counter support if blind riveting is desired to be performed.

Fig. 20 shows at (a) the still unconnected outer skin 52‴ and butt-strap 59‴, with some rivets 89‴ inserted for illustration, and at (b) a completed riveted joint region 5‴. Such a type of connection in the joint region 5‴ may provide a still higher degree of safety.

In further variants of each of the embodiments described above, the female-side active element 79 may be configured as a temperature-modifying device, in particular a heating device or a combined heating and cooling device, instead of being configured as a mechanical actuator. The active element 79 is in such variants capable of changing the temperature of the material portion 71, in particular increasing that temperature by heating the material portion 71 in order to bring about reversible thermal expansion thereof. The expansion obtained preferably is substantially homogeneous along the circumference. This expansion can then, in particular in a step analogous to the step illustrated in Fig. 16, be reversed by deactivating the heating device and letting the material portion 71 cool down, or in other variants by actively cooling the material portion 71. Upon cooling, the material portion 71 then thermally contracts.

The embodiments of the invention described hereinabove thus provide an advantageous, forceless fuselage connection using a foldable expanding jig, precisely guided and supported in a rail-based manner. The process of connecting the sections may be automated. Advantageously, the handling of tolerances can be significantly improved. Moreover, automated blind riveting during assembly may also be made possible, and a fast and stress-free fuselage assembly using blind rivets may also be achieved.

The embodiments of the invention described herein thus provide some or more advantages of:
- further improved quality and precision of the assembled fuselage;
- considerable speed increase of the assembly of the fuselage barrels;
- using specially shaped form-fit contours at the circumferential joint, considerable improvements of fatigue and structural performance;
- in some implementations, improvement of corrosion resistance due to the possibility of using advanced materials, avoiding constraints of conventional fastening techniques;
- a possibility of integrating an elastomer seal element at the section joint as a new way of sealing, instead of using a liquid sealant that requires time for curing;
- a possibility to actively deform the fuselage section using the expansion tool to mitigate tolerance driven deformations, provide a zero-zero position to the masterline and enable a surface-driven masterline;
- a possibility of shape-forming the fuselage section using the tool;
- facilitating a precise installation of further components in the fuselage later, in particular cabin components, and reducing complex and laborious adjustment of these;
- enabling a crossbeam free fuselage connection and installation of the floor grid as a substantially complete module in each fuselage section;
- simple removal of the foldable tool due to the round-folding-fan principle, in particular by rail-guided extraction from the fuselage;
- a possibility to perform expedient and rapid blind-riveting;
- a reduction of the stay-out zone in the joint region connecting the fuselage sections;
- providing a rail-based assembly interface to the frame, thereby allowing a controlled, steered fuselage section assembly.

### LIST OF REFERENCE SIGNS

- 1: arrangement
- 2: first fuselage section
- 3: second fuselage section
- 5, 5', 5", 5‴: joint region
- 5a-d: joint region
- 7: tool
- 8: hub
- 9: spoke
- 10: effective region
- 11: unfolded configuration
- 13: folded configuration
- 17: rail device
- 19: rail
- 20: guiding means
- 23: floor
- 24: upper side (floor)
- 29: interior space for accommodating passenger cabin
- 31: supporting arrangement
- 35: lower support
- 37: support device
- 41: cantilever arm
- 43: opening
- 47: engagement element (tool)
- 52: outer skin (first fuselage section)
- 53: outer skin (second fuselage section)
- 59: butt strap
- 61: clip
- 67: frame
- 68: bush
- 71: material portion
- 73: active element (tool)
- 79: active element (tool)
- 82: form-fit contour (first fuselage section)
- 83: form-fit contour (second fuselage section)
- 89': element
- 89": element
- 89‴: rivet
- 100: aircraft
- 101: fuselage
- 102: nose
- 103: empennage
- 104: wing
- 105: engine
- 110: interior (fuselage)
- 111: outer surface (fuselage)
- X: longitudinal direction
- D2: inner dimension
- d3: outer dimension
- A1, A2, A3, A4: arrow
- E: extraction movement
- F: folding movement

## Claims

1. Arrangement (1) for joining adjacent first and second barrel-shaped fuselage sections (2, 3) of an aircraft fuselage (101) in a circumferentially extending joint region (5, 5a-d; 5'; 5"; 5‴), the arrangement (1) comprising
a foldable tool (7) configured to assume at least an unfolded first configuration (11) and a folded second configuration (13), and
a rail device (17) adapted to support and displaceably guide the tool (7) such that the tool (7) can be moved substantially along a longitudinal direction (X) of the fuselage;
wherein in the first configuration (11), the tool (7) is adapted to be operated to act on the joint region (5, 5a-d; 5'; 5"; 5‴) along a circumference of the fuselage (101) from an interior (110) of the fuselage (101) so as to thereby bring about a reversible expansion of a material portion (71) configured to form part of the joint region (5, 5a-d; 5'; 5"; 5‴), and
wherein in the second configuration (13), the tool fills a smaller part of a cross-sectional area of the fuselage (101) than in the first configuration (11).

2. Arrangement according to claim 1,
**characterized in that** the tool (7) is configured in a fan-type manner and in particular **in that** the tool (7) can be folded in the manner of a hand fan.

3. Arrangement according to claim 1 or 2,
**characterized in that** in the first configuration, the tool (7) is capable of acting on the joint region (5, 5a-d; 5'; 5"; 5‴) along substantially the entire circumference of the fuselage (101).

4. Arrangement according to any one of the preceding claims,
**characterized in that** the material portion (71) which can be expanded by action of the tool (7) is part of an end portion of the first fuselage section (2) and that the tool (7) is further adapted to be operated to abut on and/or mechanically engage with an end portion of the second fuselage section (3).

5. Arrangement according to claim 4,
**characterized in that** the end portion of the first fuselage section (2) forms a female part of the joint region (5, 5a-d; 5'; 5"; 5‴) and the material portion (71) which can be expanded by action of the tool (7) is a portion of an outer skin (52) of the first fuselage section (2), and **in that** the end portion of the second fuselage section (3) forms a male part of the joint region (5, 5a-d; 5'; 5"; 5‴) and the tool (7) is further adapted to be operated to mechanically abut on a butt strap (59; 59'; 59"; 59‴) of the second fuselage section (3) and/or to engage with a frame (67) of the second fuselage section (3) adjacent the joint region (5, 5a-d; 5'; 5"; 5‴).

6. Arrangement according to any one of the preceding claims,
**characterized in that** in the first configuration (11), the tool (7) extends, in a cross-section of the fuselage (101) in the joint region (5, 5a-d; 5'; 5"; 5‴), within a space having approximately the shape of a flat, circular disc.

7. Arrangement according to any one of the preceding claims,
**characterized in that** in the second configuration (13), the tool (7) extends entirely within a space on a single side (24) of a floor (23) formed by floor sections or modules installed in the first and second fuselage sections (2, 3), in particular of a passenger floor, and preferably extends entirely within a space (29) on an upper side (24) of that floor (23).

8. Arrangement according to any one of the preceding claims,
**characterized in that** the tool (7) is adapted to bring about the expansion of the material portion (71) configured to form part of the joint region (5, 5a-d; 5'; 5"; 5‴) by applying mechanical force onto the material portion (71), in particular in hydraulic or electromechanical manner.

9. Arrangement according to any one of the preceding claims,
**characterized in that** the tool (7) is adapted to bring about the expansion of the material portion (71) configured to form part of the joint region (5, 5a-d; 5'; 5"; 5‴) by introducing heat into the material portion (71).

10. Arrangement according to any one of the preceding claims,
**characterized in that** the tool (7) is adapted to additionally provide a counter support for blind riveting in the circumferential joint region (5, 5a-d; 5'; 5"; 5‴).

11. Arrangement according to any one of the preceding claims,
**characterized in that** the rail device (17) comprises rails (19) each extending substantially along a direction parallel to the longitudinal direction (X) of the fuselage (101) through an interior of each of the barrel-shaped fuselage sections (2, 3), preferably laterally on both sides of the fuselage (101) within the interior of the fuselage sections (2, 3), and/or **in that** the rail device (17) is supported by a supporting arrangement (31) provided outside of the barrel-shaped fuselage sections (2, 3) and by cantilever arms (41) each extending from the supporting arrangement (31) through an opening (43) in a skin (52, 53; 52', 53'; 52", 53"; 52‴, 53‴) of the fuselage section (2, 3) to the rail device (17).

12. Method for joining adjacent first and second barrel-shaped fuselage sections (2, 3) of an aircraft fuselage (101) in a circumferential joint region (5, 5a-d; 5'; 5"; 5‴), in particular using the arrangement (1) according to any of claims 1 to 11, comprising steps of:
providing a foldable tool (7) configured to assume at least an unfolded first configuration (11) and a folded second configuration (13), and a rail device (17) adapted to support and displaceably guide the tool (7) such that the tool (7) can be moved substantially along a longitudinal direction (X) of the fuselage (101);
in a state in which the first and second fuselage sections (2, 3) are spaced apart from each other by a distance along the longitudinal direction (X), operating the tool (7), which assumes the first configuration, to act on the joint region (5, 5a-d; 5'; 5"; 5‴) along a circumference of the fuselage (101) from an interior (110) of the fuselage (101) and thereby bringing about a reversible expansion of a material portion (71) configured to form part of the joint region (5, 5a-d; 5'; 5"; 5‴);
relatively moving the first and second fuselage sections (2, 3) towards each other along the longitudinal direction (x) so as to close the joint region (5, 5a-d; 5'; 5"; 5‴);
operating the tool (7) so as to reverse the expansion of the material portion (71);
bringing the tool (7) into the second configuration (13) in which the tool fills a smaller part of a cross-sectional area of the fuselage (101) than in the first configuration (11); and
moving the tool (7) on the rail device (17) substantially along the longitudinal direction (X) in order to axially remove the tool (7) from the interior (110) of the fuselage (101).

13. Method according to claim 12,
**characterized in that** the material portion (71) which is expanded by action of the tool (7) is part of an end portion of the first fuselage section (2), in particular a portion of an outer skin (52; 52'; 52"; 52‴) of the first fuselage section (2), and that before the expansion of the material portion (71) is brought about, the tool (7) is brought into abutment and/or mechanical engagement with an end portion of the second fuselage section (3), in particular is operated to abut on a butt strap (59) of the second fuselage section (3) and/or to engage with a frame (67) of the second fuselage section (3) adjacent the joint region (5, 5a-d; 5'; 5"; 5‴).

14. Method according to claim 12 or 13,
**characterized in that** joining the first and second fuselage sections (2, 3) includes creating a positive connection by reversing the expansion of the material portion (71) and/or includes riveting after reversing the expansion of the material portion (71).

## Patentansprüche

1. Anordnung (1) zum Verbinden eines benachbarten ersten und zweiten tonnenförmigen Rumpfabschnitts (2, 3) eines Flugzeugrumpfes (101) in einem sich in Umfangsrichtung erstreckenden Verbindungsbereich (5, 5a-d; 5'; 5"; 5‴), wobei die Anordnung (1) Folgendes umfasst ein zusammenklappbares Werkzeug (7), das dazu ausgelegt ist, zumindest eine aufgeklappte erste Konfiguration (11) und eine zusammengeklappte zweite Konfiguration (13) einzunehmen, und
eine Schienenvorrichtung (17), die dazu eingerichtet ist, das Werkzeug (7) so zu stützen und verschiebbar zu führen, dass das Werkzeug (7) im Wesentlichen entlang einer Längsrichtung (X) des Rumpfes bewegt werden kann; wobei das Werkzeug (7) in der ersten Konfiguration (11) dazu ausgelegt ist, betätigt zu werden, um auf den Verbindungsbereich (5, 5a-d; 5'; 5"; 5"') entlang eines Umfangs des Rumpfes (101) von einem Innenraum (110) des Rumpfes (101) zu wirken, um dadurch eine umkehrbare Ausdehnung eines Materialabschnitts (71) zu bewirken, der dazu ausgelegt ist, einen Teil des Verbindungsbereichs (5, 5a-d; 5'; 5"; 5‴) zu bilden, und
wobei das Werkzeug in der zweiten Konfiguration (13) einen kleineren Teil einer Querschnittsfläche des Rumpfes (101) als in der ersten Konfiguration (11) füllt.

2. Anordnung nach Anspruch 1,
**dadurch gekennzeichnet, dass** das Werkzeug (7) fächerartig ausgelegt ist und insbesondere das Werkzeug (7) wie ein Handfächer zusammenklappbar ist.

3. Anordnung nach Anspruch 1 oder 2,
**dadurch gekennzeichnet, dass** das Werkzeug (7) in der ersten Konfiguration in der Lage ist, entlang im Wesentlichen des gesamten Umfangs des Rumpfes (101) auf den Verbindungsbereich (5, 5a-d; 5'; 5"; 5‴) zu wirken.

4. Anordnung nach einem der vorhergehenden Ansprüche,
**dadurch gekennzeichnet, dass** der durch Einwirkung des Werkzeugs (7) ausdehnbare Materialabschnitt (71) Teil eines Endabschnitts des ersten Rumpfabschnitts (2) ist und dass das Werkzeug (7) ferner dazu eingerichtet ist, dazu betätigt zu werden, an einem Endabschnitt des zweiten Rumpfabschnitts (3) anzuliegen und/oder damit mechanisch in Eingriff zu treten.

5. Anordnung nach Anspruch 4,
**dadurch gekennzeichnet, dass** der Endabschnitt des ersten Rumpfabschnitts (2) einen aufnehmenden Teil des Verbindungsbereichs (5, 5a-d; 5'; 5"; 5"') bildet und der durch Einwirkung des Werkzeugs (7) ausdehnbare Materialabschnitt (71) ein Abschnitt einer Außenhaut (52) des ersten Rumpfabschnitts (2) ist, und dass der Endabschnitt des zweiten Rumpfabschnitts (3) einen aufzunehmenden Teil des Verbindungsbereichs (5, 5a-d; 5'; 5"; 5‴) bildet und das Werkzeug (7) ferner dazu eingerichtet ist, dazu betätigt zu werden, mechanisch an einer Stoßlasche (59; 59'; 59"; 59‴) des zweiten Rumpfabschnitts (3) anzuliegen und/oder mit einem Rahmen (67) des zweiten Rumpfabschnitts (3) benachbart dem Verbindungsbereich (5, 5a-d; 5'; 5"; 5‴) in Eingriff zu treten.

6. Anordnung nach einem der vorhergehenden Ansprüche,
**dadurch gekennzeichnet, dass** sich das Werkzeug (7) in der ersten Konfiguration (11) in einem Querschnitt des Rumpfes (101) im Verbindungsbereich (5, 5a-d; 5'; 5"; 5‴) innerhalb eines Raumes erstreckt, der etwa die Form einer planen, kreisförmigen Scheibe aufweist.

7. Anordnung nach einem der vorhergehenden Ansprüche,
**dadurch gekennzeichnet, dass** sich das Werkzeug (7) in der zweiten Konfiguration (13) vollständig innerhalb eines Raumes auf einer einzelnen Seite (24) eines Bodens (23) erstreckt, der durch Bodenabschnitte oder -module gebildet ist, die im ersten und zweiten Rumpfabschnitt (2, 3), insbesondere eines Fahrgastbodens, installiert sind, und sich vorzugsweise vollständig innerhalb eines Raumes (29) auf einer Oberseite (24) dieses Bodens (23) erstreckt.

8. Anordnung nach einem der vorhergehenden Ansprüche,
**dadurch gekennzeichnet, dass** das Werkzeug (7) dazu eingerichtet ist, die Ausdehnung des Materialabschnitts (71), der dazu ausgelegt ist, einen Teil des Verbindungsbereichs (5, 5a-d; 5'; 5"; 5"') zu bilden, durch Aufbringen mechanischer Kraft auf den Materialabschnitt (71), insbesondere hydraulisch oder elektromechanisch, zu bewirken.

9. Anordnung nach einem der vorhergehenden Ansprüche,
**dadurch gekennzeichnet, dass** das Werkzeug (7) dazu eingerichtet ist, die Ausdehnung des Materialabschnitts (71), der dazu ausgelegt ist, einen Teil des Verbindungsbereichs (5, 5a-d; 5'; 5"; 5"') zu bilden, durch das Einleiten von Wärme in den Materialabschnitt (71) zu bewirken.

10. Anordnung nach einem der vorhergehenden Ansprüche,
**dadurch gekennzeichnet, dass** das Werkzeug (7) dazu eingerichtet ist, zusätzlich eine Gegenauflage für Blindnietungen im umlaufenden Verbindungsbereich (5, 5a-d; 5'; 5"; 5‴) vorzusehen.

11. Anordnung nach einem der vorhergehenden Ansprüche,
**dadurch gekennzeichnet, dass** die Schienenvorrichtung (17) Schienen (19) umfasst, die sich jeweils im Wesentlichen entlang einer Richtung parallel zur Längsrichtung (X) des Rumpfes (101) durch ein Inneres jedes der tonnenförmigen Rumpfabschnitte (2, 3) erstrecken, vorzugsweise seitlich auf beiden Seiten des Rumpfes (101) innerhalb des Inneren der Rumpfabschnitte (2, 3), und/oder dass die Schienenvorrichtung (17) von einer außerhalb der tonnenförmigen Rumpfabschnitte (2, 3) vorgesehenen Stützanordnung (31) und von Auslegerarmen (41) getragen wird, die sich jeweils von der Stützanordnung (31) durch eine Öffnung (43) in einer Haut (52, 53; 52', 53'; 52" 53"; 52"', 53‴) des Rumpfabschnitts (2, 3) zur Schienenvorrichtung (17) erstrecken.

12. Verfahren zum Verbinden eines benachbarten ersten und zweiten tonnenförmigen Rumpfabschnitts (2, 3) eines Flugzeugrumpfes (101) in einem umlaufenden Verbindungsbereich (5, 5a-d; 5'; 5"; 5"'), insbesondere unter Verwendung der Anordnung (1) nach einem der Ansprüche 1 bis 11, die folgenden Schritte umfassend:
Vorsehen eines zusammenklappbaren Werkzeugs (7), das dazu ausgelegt ist, zumindest eine aufgeklappte erste Konfiguration (11) und eine zusammengeklappte zweite Konfiguration (13) einzunehmen, und einer Schienenvorrichtung (17), die dazu eingerichtet ist, das Werkzeug (7) so zu stützen und verschiebbar zu führen, dass das Werkzeug (7) im Wesentlichen entlang einer Längsrichtung (X) des Rumpfes (101) bewegt werden kann;
in einem Zustand, in dem der erste und zweite Rumpfabschnitt (2, 3) um einen Abstand entlang der Längsrichtung (X) voneinander beabstandet sind, Betätigen des Werkzeugs (7), das die erste Konfiguration einnimmt, um auf den Verbindungsbereich (5, 5a-d; 5'; 5"; 5"') entlang eines Umfangs des Rumpfes (101) von einem Innenraum (110) des Rumpfes (101) zu wirken und dadurch eine umkehrbare Ausdehnung eines Materialabschnitts (71) zu bewirken, der dazu ausgelegt ist, einen Teil des Verbindungsbereichs (5, 5a-d; 5'; 5"; 5‴) zu bilden;
relatives Bewegen des ersten und zweiten Rumpfabschnitts (2, 3) entlang der Längsrichtung (x) aufeinander zu, um den Verbindungsbereich (5, 5a-d; 5'; 5"; 5‴) zu schließen;
Betätigen des Werkzeugs (7), um die Ausdehnung des Materialabschnitts (71) umzukehren;
Bringen des Werkzeugs (7) in die zweite Konfiguration (13), in der das Werkzeug einen kleineren Teil einer Querschnittsfläche des Rumpfes (101) füllt als in der ersten Konfiguration (11); und
Bewegen des Werkzeugs (7) auf der Schienenvorrichtung (17) im Wesentlichen entlang der Längsrichtung (X), um das Werkzeug (7) axial aus dem Innenraum (110) des Rumpfes (101) zu entfernen.

13. Verfahren nach Anspruch 12,
**dadurch gekennzeichnet, dass** der Materialabschnitt (71), der durch Einwirkung des Werkzeugs (7) ausgedehnt wird, Teil eines Endabschnitts des ersten Rumpfabschnitts (2) ist, insbesondere ein Abschnitt einer Außenhaut (52; 52'; 52"; 52‴) des ersten Rumpfabschnitts (2), und dass das Werkzeug (7) vor dem Ausdehnen des Materialabschnitts (71) in Anlage und/oder mechanischen Eingriff mit einem Endabschnitt des zweiten Rumpfabschnitts (3) gebracht wird, insbesondere dazu betätigt wird, an einer Stoßlasche (59) des zweiten Rumpfabschnitts (3) anzuliegen und/oder mit einem Rahmen (67) des zweiten Rumpfabschnitts (3) benachbart dem Verbindungsbereich (5, 5a-d; 5'; 5"; 5‴) in Eingriff zu treten.

14. Verfahren nach Anspruch 12 oder 13,
**dadurch gekennzeichnet, dass** das Verbinden des ersten und zweiten Rumpfabschnitts (2, 3) das Erzeugen einer formschlüssigen Verbindung durch Umkehren der Ausdehnung des Materialabschnitts (71) beinhaltet und/oder das Nieten nach dem Umkehren der Ausdehnung des Materialabschnitts (71) beinhaltet.

## Revendications

1. Système (1) pour assembler des premier et second tronçons de fuselage adjacents (2, 3) de forme cylindrique d'un fuselage d'aéronef (101) dans une zone de jonction (5, 5a à d ; 5' ; 5" ; 5‴) s'étendant circonférentiellement, le système (1) comprenant
un outil pliable (7) configuré pour prendre au moins une première configuration dépliée (11) et une seconde configuration pliée (13), et
un dispositif de rails (17) adapté pour supporter et guider de manière déplaçable l'outil (7) de façon à ce que l'outil (7) puisse se déplacer sensiblement le long d'une direction longitudinale (X) du fuselage ;
dans lequel, dans la première configuration (11), l'outil (7) est adapté pour être manœuvré pour agir sur la zone de jonction (5, 5a à d ; 5' ; 5" ; 5"') le long d'une circonférence du fuselage (101) depuis un intérieur (110) du fuselage (101) de manière à provoquer ainsi une dilatation réversible d'une portion de matériau (71) configurée pour former une partie de la zone de jonction (5, 5a à d ; 5' ; 5" ; 5‴), et
dans lequel, dans la seconde configuration (13), l'outil comble une plus petite partie d'une aire de section transversale du fuselage (101) que dans la première configuration (11).

2. Système selon la revendication 1,
**caractérisé en ce que** l'outil (7) est conçu en éventail et en particulier **en ce que** l'outil (7) peut être plié à la manière d'un éventail.

3. Système selon la revendication 1 ou 2,
**caractérisé en ce que**, dans la première configuration, l'outil (7) est apte à agir sur la zone de jonction (5, 5a à d ; 5' ; 5" ; 5"') sur sensiblement toute la circonférence du fuselage (101).

4. Système selon l'une quelconque des revendications précédentes,
**caractérisé en ce que** la portion de matériau (71) qui peut être dilatée par l'action de l'outil (7) fait partie d'une partie d'extrémité du premier tronçon de fuselage (2) et **en ce que** l'outil (7) est en outre adapté pour être manœuvré pour venir en appui sur une partie d'extrémité du second tronçon de fuselage (3) et/ou pour venir en prise mécanique avec celle-ci.

5. Système selon la revendication 4,
**caractérisé en ce que** la partie d'extrémité du premier tronçon de fuselage (2) forme une partie femelle de la zone de jonction (5, 5a à d ; 5' ; 5" ; 5‴) et la portion de matériau (71) pouvant être dilatée par l'action de l'outil (7) est une portion d'une peau extérieure (52) du premier tronçon de fuselage (2), et **en ce que** la partie d'extrémité du second tronçon de fuselage (3) forme une partie mâle de la zone de jonction (5, 5a à d ; 5' ; 5" ; 5"') et l'outil (7) est en outre adapté pour être manœuvré pour venir mécaniquement en appui sur un couvre-joint (59 ; 59' ; 59" ; 59"') du second tronçon de fuselage (3) et/ou pour venir en prise avec un cadre (67) du second tronçon de fuselage (3) adjacent à la zone de jonction (5, 5a à d ; 5' ; 5" ; 5‴).

6. Système selon l'une quelconque des revendications précédentes,
**caractérisé en ce que**, dans la première configuration (11), l'outil (7) s'étend, dans une section transversale du fuselage (101), dans la zone de jonction (5, 5a à d ; 5' ; 5" ; 5"'), dans un espace ayant approximativement la forme d'un disque circulaire plat.

7. Système selon l'une quelconque des revendications précédentes,
**caractérisé en ce que**, dans la seconde configuration (13), l'outil (7) s'étend entièrement à l'intérieur d'un espace d'un seul côté (24) d'un plancher (23) formé par des sections ou modules de plancher installés dans les premier et second tronçons de fuselage (2, 3), notamment d'un plancher à passagers, et de préférence s'étend entièrement dans un espace (29) sur un côté supérieur (24) de ce plancher (23).

8. Système selon l'une quelconque des revendications précédentes,
**caractérisé en ce que** l'outil (7) est adapté pour provoquer la dilatation de la portion de matériau (71) configurée pour faire partie de la zone de jonction (5, 5a à d ; 5' ; 5" ; 5"') par l'application d'une force mécanique sur la portion de matériau (71), notamment de manière hydraulique ou électromécanique.

9. Système selon l'une quelconque des revendications précédentes,
**caractérisé en ce que** l'outil (7) est adapté pour provoquer la dilatation de la portion de matériau (71) configurée pour faire partie de la zone de jonction (5, 5a à d ; 5' ; 5" ; 5"') par introduction de chaleur dans la portion de matériau (71).

10. Système selon l'une quelconque des revendications précédentes,
**caractérisé en ce que** l'outil (7) est conçu pour fournir en outre un contre-support pour le rivetage aveugle dans la zone de jonction circonférentielle (5, 5a à d ; 5' ; 5" ; 5‴).

11. Système selon l'une quelconque des revendications précédentes,
**caractérisé en ce que** le dispositif de rails (17) comprend des rails (19) s'étendant chacun sensiblement dans une direction parallèle à la direction longitudinale (X) du fuselage (101) à travers un intérieur de chacun des tronçons de fuselage (2, 3) de forme cylindrique, de préférence latéralement des deux côtés du fuselage (101) à l'intérieur des tronçons de fuselage (2, 3), et/ou **en ce que** le dispositif de rails (17) est supporté par un système de support (31) placé à l'extérieur des tronçons de fuselage (2, 3) de forme cylindrique et par des bras en porte-à-faux (41) s'étendant chacun depuis le système de support (31) à travers une ouverture (43) dans une peau (52, 53 ; 52', 53' ; 52", 53" ; 52‴, 53‴) du tronçon de fuselage (2, 3) jusqu'au dispositif de rails (17).

12. Procédé pour assembler des premier et second tronçons de fuselage adjacents (2, 3) de forme cylindrique d'un fuselage d'aéronef (101) dans une zone de jonction circonférentielle (5, 5a à d ; 5' ; 5" ; 5"'), en particulier à l'aide du système (1) selon l'une quelconque des revendications 1 à 11, comprenant les étapes suivantes :
préparer un outil pliable (7) configuré pour prendre au moins une première configuration dépliée (11) et une seconde configuration pliée (13), et
un dispositif de rails (17) adapté pour supporter et guider de manière déplaçable l'outil (7) de façon à ce que l'outil (7) puisse se déplacer sensiblement le long d'une direction longitudinale (X) du fuselage (101) ;
dans un état dans lequel les premier et second tronçons de fuselage (2, 3) sont espacés l'une de l'autre d'une certaine distance le long de la direction longitudinale (X), manœuvrer l'outil (7), qui prend la première configuration, pour agir sur la zone de jonction (5, 5a à d ; 5' ; 5" ; 5‴) le long d'une circonférence du fuselage (101) depuis un intérieur (110) du fuselage (101) et provoquer ainsi une dilatation réversible d'une portion de matériau (71) configurée pour former une partie de la zone de jonction (5, 5a à d ; 5' ; 5" ; 5"') ;
déplacer les premier et second tronçons de fuselage (2, 3) l'un relativement l'autre pour les rapprocher le long de la direction longitudinale (x) de manière à fermer la zone de jonction (5, 5a à d ; 5' ; 5" ; 5‴) ;
manœuvrer l'outil (7) de manière à inverser la dilatation de la portion de matériau (71) ;
mettre l'outil (7) dans la seconde configuration (13), dans laquelle l'outil comble une plus petite partie d'une aire de section transversale du fuselage (101) que dans la première configuration (11) ; et
déplacer l'outil (7) sur le dispositif de rails (17) sensiblement le long de la direction longitudinale (X) afin de retirer axialement l'outil (7) de l'intérieur (110) du fuselage (101).

13. Procédé selon la revendication 12,
**caractérisé en ce que** la portion de matériau (71) qui est dilatée par l'action de l'outil (7) fait partie d'une partie d'extrémité du premier tronçon de fuselage (2), notamment est une portion d'une peau extérieure (52 ; 52' ; 52" ; 52"') du premier tronçon de fuselage (2), et qu'avant que la dilatation de la portion de matériau (71) ne soit provoquée, l'outil (7) est mis en appui sur une partie d'extrémité du second tronçon de fuselage (3) et/ou en prise mécanique avec celle-ci, en particulier est manœuvré pour venir en appui sur un couvre-joint (59) du second tronçon de fuselage (3) et/ou pour venir en prise avec un cadre (67) du second tronçon de fuselage (3) adjacent à la zone de jonction (5, 5a à d ; 5' ; 5" ; 5"').

14. Procédé selon la revendication 12 ou 13,
**caractérisé en ce que** l'assemblage des premier et second tronçons de fuselage (2, 3) comporte la création d'une liaison par complémentarité de forme par inversion de la dilatation de la portion de matériau (71) et/ou comporte un rivetage après l'inversion de la dilatation de la portion de matériau (71).
